# EUROPEAN PATENT APPLICATION

(11) **EP 1 628 041 A1**
(43) Date of publication of application: **22.02.2006**
(21) Application number: 04735345.3
(22) Date of filing: 28.05.2004
(51) Int. Cl.: F16F 15/08

(54) **ELASTIC SUPPORT DEVICE AND POWER STEERING DEVICE**

(30) Priority: 29.05.2003 JP 2003153177
(71) Applicant: Favess Co., Ltd., Okazaki-shi Aichi 444-2106 (JP); TOYODA KOKI KABUSHIKI KAISHA, Kariya-shi, Aichi 448-8652 (JP); Koyo Seiko Co., Ltd., Osaka-shi, Osaka 542-0081 (JP)
(72) Inventor: HAMASAKI, Yoshiaki, c/o FAVESS CO. LTD., Okazaki-shi, Aichi 444-2106 (JP); YOSHIHARA, Yoshihito, c/o FAVESS CO. LTD., Okazaki-shi, Aichi 444-2106 (JP); TANIWA, Takashi, c/o FAVESS CO. LTD., Okazaki-shi, Aichi 444-2106 (JP)
(74) Representative: Steil, Christian
(86) International application number: PCT/JP2004/007737
(87) International publication number: WO 2004/106771

(57) **Abstract**

An elastic support device (70) has a vibration reduction member (35) for supporting a vibration transmission medium (34). The vibration transmission medium (34) is connected to the vibration reduction member (35) by a connection member (42). The vibration reduction member (35) includes a sleeve (43) made from a rigid body, through which sleeve the connection member (42) is inserted, and an elastic member (45) surrounding an outer periphery of the sleeve (43) . The elastic member (45) includes a tubular body (49) firmly fixed on an outer peripheral surface (44) of the sleeve (43) and an annular plate portion (50) projecting radially outward of the body (49) . A fitting groove (58) of an outer peripheral edge portion (57) of the annular plate portion (50) is fitted on a peripheral edge (60) of an installation hole (59). A first and a second face (52, 53) of the annular plate portion (50) include recesses (54, 55), respectively. In the annular plate portion (50), a thin-walled portion (56) corresponding to a portion between bottoms of the recesses (54, 55) of the first and the second faces (52, 53) is formed.

## Description

### Technical Field

The present invention relates to an elastic support device and a power steering apparatus.

### Background Art

Automobiles comprise various types of devices such as engines and steering devices, and the devices include devices mounted on the vehicle bodies (bodies) with brackets serving as mounting members sandwiched therebetween.

For example, an automobile disclosed in Japanese Unexamined Patent Publication No. 11-334616, A laid open to public inspection with non-examination by Japanese Patent Office on December 7, 1999 comprises an electric motor-driven pump type power steering apparatus. The electric motor-driven pump type power steering apparatus drives a pump using an electric motor, and supplies hydraulic oil stored in a tank or the like to a power cylinder coupled to a steering mechanism to produce a steering assist force. The electric motor, the pump, the tank, and the like are mounted on a vehicle body with a fixing member sandwiched therebetween.

Generally, the electric motor and the pump generate vibration at the time of driving. The vibration generated by the pump is also transmitted to the tank connected to the pump. When the electric motor, the pump, and the tank are mounted on the vehicle body with only a bracket sandwiched therebetween, therefore, the vibration is transmitted to the vehicle body, causing noise in the vehicle body.

The same problems also exist in not only the electric motor, the tank, and the pump but also other devices mounted on the vehicle body.

An object of the present invention is to provide a low-cost elastic support device capable of reducing vibration and noise in a vehicle body and satisfactorily maintaining a vibration absorbing effect for a long time period and a power steering apparatus comprising the same.

### Disclosure of Invention

In order to attain the above-mentioned object, in one mode of the present invention, an elastic support device that elastically supports a vibration transmission medium comprises an installation hole provided in a fixing member, and a vibration reduction member mounted on the installation hole for supporting the vibration transmission medium, the vibration reduction member comprising a sleeve composed of a rigid body having a mounting bolt insertion hole and mounted on the vibration transmission medium by a mounting bolt inserted through the mounting bolt insertion hole, and an elastic member surrounding an outer peripheral surface of the sleeve, the elastic member comprising a tubular body fastened to the outer peripheral surface of the sleeve and an annular plate portion projecting radially outward from the body, the annular plate portion comprising first and second faces opposed to each other in an axial direction of the annular plate portion and an outer peripheral edge, the outer peripheral edge of the annular plate portion including an annular fitting groove that can be fitted in a peripheral edge of the installation hole in the fixing member, the first and second faces of the annular plate portion respectively comprising recesses, the annular plate portion forming a thin-walled portion corresponding to an area between a bottom of the recess in the first face and a bottom of the recess in the second face.

According to this mode, it is possible to satisfactorily make the elastic member flex by forming the recess and to sufficiently absorb vibration from the vibration transmission medium. Consequently, vibration and noise in a vehicle body can be significantly reduced by restraining the transmission of the vibration to the vehicle body through the fixing member. Further, the elastic member may be only provided with the recess, resulting in low cost.

Since the body of the elastic member is fastened to the sleeve, the body of the elastic member can be prevented from being scraped against and separated from the sleeve by the vibration from the vibration transmission medium, for example. Consequently, the elastic member can be prevented from being damaged and slipping off the sleeve, so that a vibration absorbing effect can be satisfactorily maintained for a long time period.

### Brief Description of Drawings

Fig. 1 is a schematic view showing the schematic configuration of a power steering apparatus according to an embodiment of the present invention.
Fig. 2 is a schematic partial side view of a housing, a vibration absorbing member and a bracket.
Fig. 3 is a cross-sectional view taken along a line II - II shown in Fig. 2.

### Best Mode for Carrying out the Invention

A preferred embodiment of the present invention will be described while referring to the accompanying drawings.

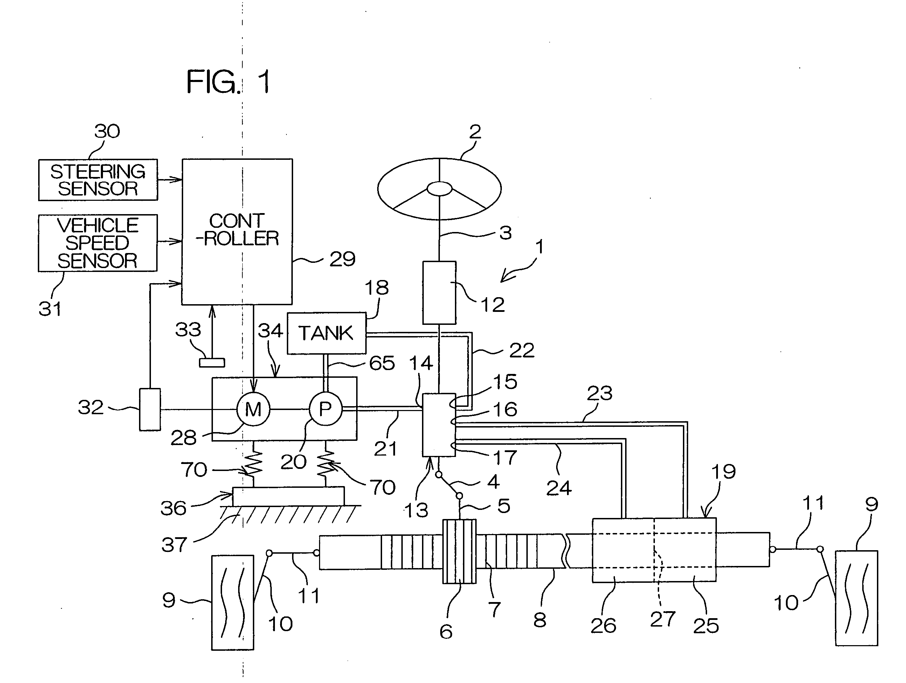

Fig. 1 is a schematic view showing the schematic configuration of a power steering apparatus 1 according to an embodiment of the present invention. Referring to Fig. 1, the power steering apparatus 1 comprises a steering member 2 such as a steering wheel operated by a driver, a steering shaft 3 connected to the steering member 2, a pinion shaft 5 connected to the steering shaft 3 through an intermediate shaft 4, and a rack shaft 8 having a rack 7 meshed with a pinion 6 provided in the pinion shaft 5 and extending along the width of a vehicle.

To a pair of ends of the rack shaft 8, knuckle arms 10 for supporting corresponding wheels 9 are respectively connected through corresponding tie rods 11. By the above-mentioned configuration, when the steering member 2 is operated so that the steering shaft 3 is rotated, the rotation is transmitted to the pinion shaft 5 through the intermediate shaft 4 et al. The rotation of the pinion shaft 5 is converted into linear motion of the rack shaft 8 arranged along the width of the vehicle by the pinion 6 and the rack 7. As a result, the knuckle arm 10 is rotated, thereby achieving steering of the wheels 9.

A torsion bar 12 causing twisting depending on the direction and the magnitude of steering torque applied to the steering member 2 and a hydraulic control valve 13 whose opening changes depending on the direction and the magnitude of the twisting of the torsion bar 12 are interposed in a halfway portion of the steering shaft 3.

The hydraulic control valve 13 comprises four ports 14 to 17. Hydraulic oil pumped out of a tank 18 through an oil pipe 65 is supplied to the port 14 through an oil pipe 21 by a pump 20 interposed between the tank 18 and a power cylinder 19 for generating a steering assist force. The port 15 communicates with the tank 18 with an oil pipe 22 sandwiched therebetween.

The ports 16 and 17 respectively communicate with oil chambers 25 and 2.6 in the power cylinder 19 through oil pipes 23 and 24. The oil chambers 25 and 26 in the power cylinder 19 are respectively provided with pistons 27 that are moved along the width of the vehicle by the difference in hydraulic pressure between the oil chambers 25 and 26. The piston 27 is constructed integrally with the rack shaft 8.

When the steering member 2 is operated to rotate in any one of rotation directions, the torsion bar 12 is twisted, so that hydraulic oil is supplied to either one of the oil chambers 25 and 26 in the power cylinder 19 from the hydraulic control valve 13 depending on an amount corresponding to the twisting of the torsion bar 12. As a result, the difference in hydraulic pressure occurs between the oil chambers 25 and 26, and the piston 27 in the power cylinder 19 is moved depending on the difference in hydraulic pressure, so that a steering assist force is applied to the rack shaft 8.

In this case, an excess of hydraulic oil is returned to the tank 18 from the hydraulic control valve 13 through the oil pipe 22. When the torsion bar 12 is hardly twisted, the hydraulic control valve 13 enters an equilibrium state, where hydraulic oil supplied to the hydraulic control valve 13 from the pump 20 is returned to the tank 18 through the oil pipe 22 without being supplied to the power cylinder 19.

The pump 20 is, for example, a gear pump performing a pump function by the rotation of a driving gear and a driven gear (not shown). An output (torque) of an electric motor 28 for pump driving is inputted to the driving gear.

The electric motor 28 is driven and controlled by a controller 29 including a microcomputer. Output signals of a steering angle sensor 30 in the steering member 2, a vehicle speed sensor 31 for detecting the vehicle speed of a vehicle, a motor current detection circuit 32 for detecting a current (a motor current) flowing in the electric motor 28, and a motor rotation speed sensor 33 for detecting the rotation speed of the electric motor 28 are fed to the controller 29.

The controller 29 controls the driving of the electric motor 28 so as to apply a suitable steering assist force corresponding to a steering amount of the steering member 2 to the rack shaft 8 on the basis of the signals fed from the steering angle sensor 30, the vehicle speed sensor 31, the motor current detection circuit 32, the motor rotation speed sensor 33, and so forth.

A housing 34 of the electric motor 28 and the pump 20 integrally constitute a member to be mounted, for example. The housing 34 is mounted on a bracket 36 serving as a fixing member fixed to a vehicle body 37 and elastically supported thereon by a pair of elastic support devices 70, for example. The housing 34 serves as a vibration transmission medium for transmitting vibration in rotating portions of the electric motor 28 and the pump 20 to the vehicle body 37. The elastic support device 70 serves to reduce vibration transmission from the housing 34 to the vehicle body 37.

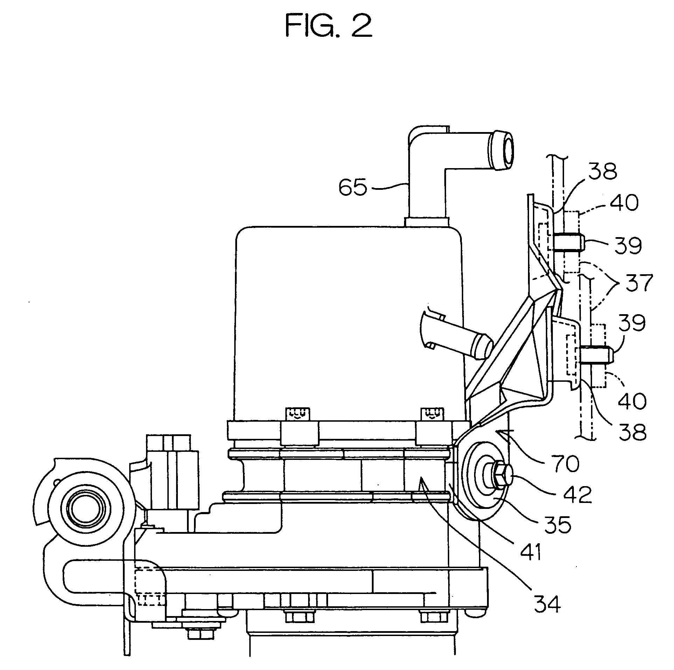

Referring to Fig. 2, the bracket 36 is formed in a plate shape by a steel plate, for example, and is arranged between the housing 34 and the vehicle body 37 indicated by a two-dot and dash line. The bracket 36 has an opposite surface 38 opposed to the vehicle body 37, and is formed such that two bolts 39, for example, project from the opposite surface 38. Each of the bolts 39 is inserted through a corresponding bolt insertion hole of the vehicle body 37, and is coupled to a corresponding nut 40.

Each of the elastic support devices 70 comprises a vibration reduction member 35 mounted on the bracket 36 and a bolt 42 for mounting the vibration reduction member 35 in a state where it abuts against a seat 41 provided in the housing 34.

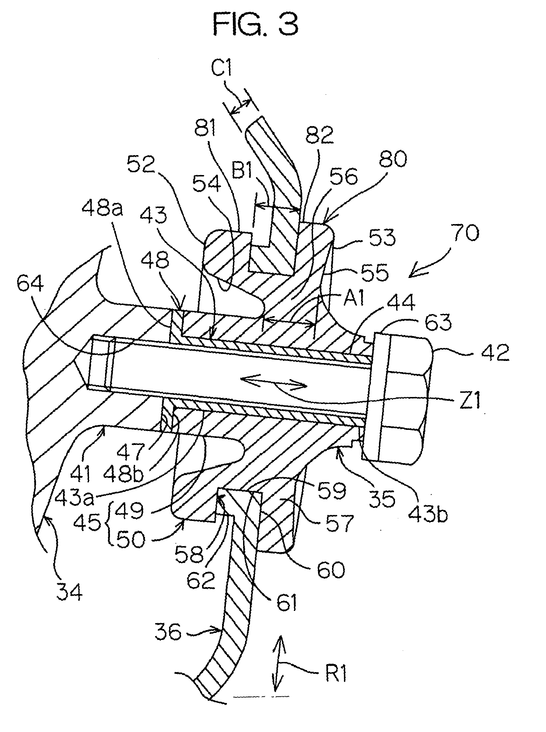

Fig. 3 is a cross-sectional view taken along a line II-II shown in Fig. 2. Referring to Fig. 3, the vibration reduction member 35 comprises a sleeve 43 composed of a rigid body mounted on the seat 41 in the housing 34 through a bolt 42 to be inserted, and an elastic member 45 fastened to an outer peripheral surface 44 of the sleeve 43.

The sleeve 43 comprises first and second ends 43a and 43b. An annular flange 48 extending radially outward from the first end 43a is provided at the first end 43a of the sleeve 43. A first face 48a of the flange 48 abuts against a seat face 47 of the seat 41 in the housing 34, and receives the seat face 47. The flange 48 allows a contact area with the seat face 47 of the housing 34 to be made larger. As a result, at the time of fastening the bolt 42, a force per unit area which the seat face 47 receives from the sleeve 43 can be reduced. Even when the housing 34 is formed of aluminum or the like having relatively low mechanical strength, therefore, the seat face 47 is prevented from subsiding as the seat 41 is deformed.

The elastic member 45 is formed of synthetic rubber such as natural rubber or nitrile rubber, for example. The elastic member 45 comprises a tubular body 49 fastened to the outer peripheral surface of the sleeve 43 and an annular plate portion 50 projecting radially outward from an intermediate portion in the axial direction of the body 49.

The body 49 in the elastic member 45 surrounds the sleeve 43. The body 49 has a fastening surface fastened to the outer peripheral surface 44 of the sleeve 43 and the second face 48b of the flange 48 by vulcanizing adhesion, for example.

The annular plate portion 50 is formed integrally with the body 49 by a single member, to surround the outer periphery of the body 49. The annular plate portion 50 comprises first and second faces 52 and 53 opposed to each other in the axial direction, and the first and second faces 52 and 53 are respectively formed with first and second recesses 54 and 55 each having a V shape in cross section.

The recesses 54 and 55 are respectively formed over the whole peripheries, for example, of the corresponding faces 52 and 53. By forming the recesses 54 and 55, a thin-walled portion 56 is formed in an intermediate portion in the radial direction of the annular plate portion 50. This makes the movement of the body 49 relative to the annular plate portion 50 easy.

Ease of elastic deformation of the elastic member 45 can be easily set by suitably setting the thickness A1 of the thin-walled portion 56. Although the respective shapes of the recesses 54 and 55 differ in Fig. 3, they may have the same shape.

An annular fitting groove 58 is provided in an intermediate portion in the axial direction of an outer peripheral edge 57 of the annular plate portion 50. A peripheral edge 60 of an installation hole 59 in the bracket 36 is elastically fitted in the fitting groove 58. In a free state where the vibration reduction member 35 is not mounted on the bracket 36, the diameter of a bottom surface 61 of the fitting groove 58 is set at a value larger than the diameter of the installation hole 59 in the bracket 36.

When the fitting groove 58 is fitted in the peripheral edge 60 of the installation hole 59 in the bracket 36, therefore, the annular plate portion 50 can be brought into press contact with the installation hole 59 and reliably fixed thereto. Consequently, the annular plate portion 50 can be prevented from being scraped against the installation hole 59 in the bracket 36 to be damaged and being separated therefrom.

An outer peripheral surface 80 of the annular plate portion 50 has first and second portions 81 and 82 with the fitting groove 58 interposed therebetween, and the diameter of the first portion 81 is set at a value smaller than the diameter of the second portion 82. Consequently, the elastic member 45 is easily fitted in the installation hole 59 in the bracket 36.

An annular rim 62 is provided at the peripheral edge 60 of the installation hole 59 in the bracket 36. The rim 62 is formed by folding the peripheral edge 60 of the installation hole 59 in the bracket 36, for example. Further, a peripheral surface of the installation hole 59 is formed so as to be coplanar in the axial direction. By the above-mentioned configuration, the length B1 of the installation hole 59, that is, the width in which the bracket 36 supports the elastic member 45 is made larger.

The thickness C1 of the bracket 36 is so set that it can ensure strength required to support the housing 34 and has such a natural frequency that the bracket 36 does not resonate upon receipt of vibration in the housing 34. A washer 63 is arranged at the other end in the axial direction of the sleeve 43 in the vibration reduction member 35, and is fastened to the body 49 in the elastic member 45 by vulcanizing adhesion, for example. The bolt 42 is inserted through the washer 63 and the sleeve 43, and is screwed into a bolt hole 64 in the washer 41 in the housing 34 and coupled thereto, to fasten the vibration reduction member 35 to the washer 41 in the housing 34.

The elastic member 45 is mounted such that the first and second faces 52 and 53 of the annular plate portion 50 are directed transversely (toward the right to left in Fig. 3), that is, the own weight of the housing 34 is exerted along the radius of the annular plate portion 50 in the elastic member 45.

According to the present embodiment, the recesses 54 and 55 are thus formed, thereby allowing the elastic member 45 to be satisfactorily made flex so that the vibration in the housing 34 caused by the driving of the electric motor 28 and the pump 20 can be sufficiently absorbed. Consequently, vibration and noise in the vehicle body 37 can be significantly reduced by satisfactorily preventing transmission of the vibration to the vehicle body 37.

Furthermore, the vibration absorbing effect is obtained only by providing the elastic member 45 with the recesses 54 and 55, resulting in low cost. Further, the elastic member 45 and the sleeve 43 are fastened to each other. Therefore, the elastic member 45 can be prevented from being scraped against and separated from the sleeve 43 by the vibration in the housing 34, for example. Consequently, the elastic member 45 can be prevented from being damaged and slipping off the sleeve 43, thereby making it possible to satisfactorily maintain the vibration absorbing effect for a long time period.

The length B1 of the installation hole 59, that is, the width in which the bracket 36 supports the elastic member 45 can be sufficiently ensured by providing the rim 62 at the peripheral edge 60 of the installation hole 59 in the bracket 36, so that the elastic member 45 can be satisfactorily supported.

The thickness C1 of the bracket 36 can be made as small as about one-half the conventional thickness, for example, without reducing the width in which the bracket 36 supports the elastic member 45, thereby making it possible to significantly make the bracket 36 lightweight. The bracket 36 can be molded by a smaller-sized pressing machine by further thin-walling the bracket 36, thereby making it possible to significantly reduce the manufacturing cost.

The vibration and the noise in the vehicle body 37 can be reduced at low cost without changing the electric motor 28 and the pump 20 each serving as a vibration source.

Since the annular elastic member 45 is transversely arranged, and the peripheral edge of the annular plate 50 in the elastic member 45 is engaged with the bracket 36, the elastic member 45 can perform a high vibration absorbing effect with respect to all vibrations in every radial direction R1 of the annular plate portion 50. Further, a high vibration absorbing effect can be also performed with respect to vibrations in an axial direction Z1 of the annular plate portion 50.

The present invention is not limited to the above-mentioned embodiments. For example, the recesses 54 and 55 may be provided in only a part in the circumferential direction of the annular plate portion 50 in the elastic member 45. Further, the vibration reduction member 35 may be interposed between the bracket 36 and the vehicle body 37.

Furthermore, the tank 18 may be supported with the vibration reduction member 35 interposed between a bracket (not shown) for supporting a housing portion of the tank 18 and the vehicle body 37. In this case, the vibration generated by the pump 20 that is transmitted to the tank 18 through the oil pipe 65 can be satisfactorily prevented from being transmitted to the vehicle body 37.

The present invention is not limited to a configuration in which a housing of the electric motor and a housing of the pump that are integrally constructed are supported. However, the present invention may be a configuration in which the housing of the electric motor and the housing of the pump that are independently constructed are respectively supported.

Alternatively, the elastic support device according to the present invention is applicable to support of another device, which is mounted on a vehicle body, other than an electric motor-driven pump type power steering apparatus.

While the present invention has been described in detail by way of the specific embodiments, those skilled in the art who have understood the foregoing contents would easily consider its changes, modifications, and equivalents of the embodiments. Therefore, the scope of the present invention should be defined by the claims and their equivalents.

The present application corresponds to an application No. 2003-153177 filed with the Japanese Patent Office on May 29, 2003, the disclosure of which is herein incorporated by reference.

## Claims

1. An elastic support device that elastically supports a vibration transmission medium, comprising:
an installation hole provided in a fixing member fixed to a vehicle body;
a vibration reduction member mounted on the installation hole for supporting the vibration transmission medium; and
a connection member for connecting the vibration transmission medium to the vibration reduction member,
the vibration reduction member comprising:
a sleeve composed of a rigid body through which the connection member is inserted; and
an elastic member surrounding an outer peripheral surface of the sleeve,
the elastic member comprising a tubular body fastened to the outer peripheral surface of the sleeve and an annular plate portion projecting radially outward from the body,
the annular plate portion comprising first and second faces opposed to each other in an axial direction of the annular plate portion and an outer peripheral edge,
the outer peripheral edge of the annular plate portion comprising an annular fitting groove fitted in a peripheral edge of the installation hole in the fixing member,
the first and second faces of the annular plate portion respectively comprising recesses, and
the annular plate portion forming a thin-walled portion corresponding to an area between a bottom of the recess in the first face and a bottom of the recess in the second face.

2. The elastic support device according to claim 1, wherein at least one of the recess in the first face of the annular plate portion and the recess in the second face thereof has an annular shape.

3. The elastic support device according to claim 1 or 2, wherein at least one of the recess in the first face of the annular plate portion and the recess in the second face thereof includes a recess having a V shape in cross section.

4. The elastic support device according to claim 1 or 2, wherein
the first face of the annular plate portion is opposed to the vibration transmission member,
the recess in the first face has a V shape in cross section, and
the bottom of the recess in the first face is arranged so as to be overlapped with the peripheral edge of the installation hole in the axial direction of the annular plate portion.

5. The elastic support device according to claim 1 or 2, wherein the sleeve comprises first and second ends, the first end of the sleeve receiving a seat face provided in the vibration transmission medium.

6. The elastic support device according to claim 5, wherein an annular flange extending radially outward and receiving the seat face of the vibration transmission medium is formed at the first end of the sleeve.

7. The elastic support device according to claim 6, wherein the vibration transmission medium includes aluminum.

8. The elastic support device according to claim 1 or 2, wherein the annular plate portion is arranged at a position corresponding to an intermediate portion in an axial direction of the body.

9. The elastic support device according to claim 1 or 2, wherein the bottom of the annular groove is elastically compressed by the peripheral edge of the installation hole.

10. The elastic support device according to claim 9, wherein a rim is provided at the peripheral edge of the installation hole.

11. The elastic support device according to claim 1 or 2, wherein the elastic member includes rubber adhered by vulcanization to the outer peripheral surface of the sleeve.

12. The elastic support device according to claim 1 or 2, wherein the connection member includes a screw member, and the screw member is coupled to a screw hole provided in the vibration transmission medium through an insertion hole of the sleeve.

13. The elastic support device according to claim 1 or 2, wherein the fixing member comprises a bracket fixed to the vehicle body.

14. A power steering apparatus comprising:
a power cylinder for generating a steering assist force;
a tank storing hydraulic oil;
a pump interposed between the tank and the power cylinder;
an electric motor for driving the pump;
a fixing member fixed to the vehicle body;
a vibration transmission medium including at least one of a housing of the pump and a housing of the tank; and
an elastic support device for elastically supporting the vibration transmission medium,
the elastic support device comprising:
an installation hole provided in the fixing member fixed to a vehicle body;
a vibration reduction member mounted on the installation hole for supporting the vibration transmission medium; and
a connection member for connecting the vibration transmission medium to the vibration reduction member,
the vibration reduction member comprising:
a sleeve composed of a rigid body through which the connection member is inserted; and
an elastic member surrounding an outer peripheral surface of the sleeve,
the elastic member comprising a tubular body fastened to the outer peripheral surface of the sleeve and an annular plate portion projecting radially outward from the body,
the annular plate portion comprising first and second faces opposed to each other in an axial direction of the annular plate portion and an outer peripheral edge,
the outer peripheral edge of the annular plate portion comprising an annular fitting groove that can be fitted in the peripheral edge of the installation hole in the fixing member,
the first and second faces of the annular plate portion respectively comprising recesses,
the annular plate portion forming a thin-walled portion corresponding to an area between the bottom of the recess in the first face and the bottom of the recess in the second face.

15. The power steering apparatus according to claim 14, wherein at least one of the recess in the first face of the annular plate portion and the recess in the second face thereof has an annular shape.

16. The power steering apparatus according to claim 14 or 15, wherein at least one of the recess in the first face of the annular plate portion and the recess in the second face thereof includes a recess having a V shape in cross section.

17. The power steering apparatus according to claim 14 or 15, wherein the first face of the annular plate portion is opposed to the vibration transmission member, the recess in the first face thereof has a V shape in cross section, and the bottom of the recess in the first face is arranged so as to be overlapped with the peripheral edge of the installation hole in the axial direction of the annular plate portion.
